Europäisches Patentamt

European Patent Office

Office européen des brevets

(19)

(11) Veröffentlichungsnummer: **0 347 651 B1**

(12) **EUROPÄISCHE PATENTSCHRIFT**

(45) Veröffentlichungstag der Patentschrift:
10.04.91 Patentblatt 91/15

(51) Int. Cl.$^5$: **B60H 1/24, F24F 13/075**

(21) Anmeldenummer: 89110322.8

(22) Anmeldetag: 07.06.89

(54) **Luftauslass für Innenräume, insbesondere für den Innenraum eines Kraftfahrzeuges.**

(30) Priorität: 20.06.88 DE 3821110

(43) Veröffentlichungstag der Anmeldung:
27.12.89 Patentblatt 89/52

(45) Bekanntmachung des Hinweises auf die
Patenterteilung:
10.04.91 Patentblatt 91/15

(84) Benannte Vertragsstaaten:
DE ES FR GB IT NL SE

(56) Entgegenhaltungen:
US-A- 3 065 685
US-A- 3 180 246
US-A- 4 412 480

(73) Patentinhaber: Siemens Aktiengesellschaft
Wittelsbacherplatz 2
W-8000 München 2 (DE)

(72) Erfinder: Soethout, Freddie
Hunsrückstrasse 5
W-5000 Köln 60 (DE)

## Beschreibung

Luftauslaß für Innenräume, insbesondere für den Innenraum eines Kraftfahrzeuges.

Die Erfindung liegt auf dem Gebiet der Belüftung von Innenräumen und ist bei der konstruktiven Ausgestaltung eines Luftauslasses anzuwenden, dessen Ausströmcharakteristik durch schwenkbar gelagerte Lamellen veränderbar ist. Derartige Luftauslässe sind insbesondere für den Einsatz in Kraftfahrzeugen geeignet.

Zur Belüftung eines Kraftfahrzeuges ist aus der DE-A-2936185 ein gattungsgemäßer Luftauslaß bekannt, der aus einem vertikal schwenkbar angeordneten Gehäuse mit mehreren in dem Gehäuse angeordneten Lamellen besteht. Die Lamellen sind miteinander gekoppelt und gemeinsam schwenkbar im Gehäuse gelagert. Die Fläche der Lamellen ist im wesentlich rechteckförmig gestaltet, während die Lamellen im Querschnitt doppelkeilförmig ausgebildet sind. Im geschlossenen Zustand des Luftauslasses liegen die Seitenkanten der Lamellen überlappend aneinander.

Bei einem anderen bekannten Luftauslaß dieser Art, der auch als Lamellen-Auslaß oder als Jalousie-Düse bezeichnet wird, sind die Lamellen derart ausgebildet und angeordnet, daß ungerichtete Randströmungen vermieden und eine besonders gute Richtwirkung erzielt wird. Hierbei können die Lamellen auf ein gemeinsames Zentrum hin ausgerichtet sein, wodurch eine ausgeprägt gebündelte oder eine ausgeprägt divergente Ausblasströmung erzeugt wird (DE-B 35 29 463).

Mit einem weiterhin bekannten Luftauslaß kann entweder ein gebündelter oder ein divergierender Luftstrahl erzeugt werden. Hierzu ist die Ausströmöffnung des Luftauslasses durch Leitwände gitterartig in eine größere Anzahl von Luftführungs kanälen unterteilt. Durch gemeinsames Verschwenken der Leitwände, wodurch dem Luftauslaß die Form einer Kugelkalotte erteilt wird, kann eine Neigung bestimmter Leitwände gegenüber der Achse des Luftauslasses erreicht werden. Dies hat zur Folge, daß die Ausströmungsrichtungen der Luftführungskanäle von der Achse des Luftauslasses divergieren, so daß aus dem Luftauslaß ein in verschiedene Strömungsrichtungen aufgefächerter Luftstrahl austritt. Zur Einstellung dieses Luftstrahles können die Leitwände mit zwei kreuzartig angeordneten Spannfedern in Schwenkverbindung stehen (DE-A 24 44 116).

Schließlich ist zum Belüften oder Klimatisieren von Aufenthaltsräumen ein verstellbarer, dem Aufenthaltsbereich einer Person zugeordneter Luftauslaß bekannt, der zwei konzentrisch zueinander angeordnete Auslaßbereiche aufweist. Beide Auslaßbereiche sind in mehrere Auslaßkanäle unterteilt, die jeweils von einem inneren und einem äußeren Wandbereich und von durch Schaufeln gebildeten Leitwänden begrenzt sind. Die Schaufeln des äußeren Auslaßbereiches können schräg angestellt sein, um auf die Luftstrahlen drallgebend einzuwirken. Der innere Auslaßbereich kann mit einem verschiebbaren Einsatz zur Einstellung des Luftstromes versehen sein (DE-B 25 25 917, DE-A 27 02 334).

Ausgehend von einem Luftauslaß mit den Merkmalen des Oberbegriffes des Patentanspruches 1 liegt der Erfindung die Aufgabe zugrunde, den Luftauslaß so auszugestalten, daß ohne bedienungstechnischen Mehraufwand sowohl eine richtbare Kompakt-Strahlausströmung als auch eine Diffus-Ausströmung, insbesondere eine divergierende Diffus-Ausströmung, einstellbar ist.

Zur Lösung dieser Aufgabe ist gemäß der Erfindung vorgesehen, daß die Lamellen aus Platten bestehen, deren Breite höchstens gleich der lichten Breite des Luftauslasses dividiert durch die Anzahl der Platten ist und daß jede Platte mit mehreren kanalartigen Durchbrüchen versehen ist, deren Achsen mit der Plattenebene einen Winkel zwischen 30 und 60° einschließen.

Bei einem derart ausgebildeten Luftauslaß strömt die Luft im geschlossenen Zustand der Lamellen bzw. Platten durch die kanalartigen Durchbrüche hindurch diffus in den Innenraum hinein ; die diffuse Ausströmung der Luft wird dabei durch die Neigung der Achsen der Durchbrüche gegenüber der jeweiligen Plattenebene und damit – in geschlossenem Zustand der Platten – gegenüber der Ausströmfläche des Luftauslasses erreicht. Diese Neigung ist vorzugsweise so gewählt, daß die Achsen der Durchbrüche und die jeweilige Plattenebene einen Winkel von 35 bis 50° einschließen. – Die Durchbrüche in den Platten eines Luftauslasses können unterschiedliche Neigungen haben. Insbesondere können die im äußeren Bereich des Luftauslasses liegenden Durchbrüche eine größere Neigung als die im inneren Bereich liegenden Durchbrüche haben.

Bezüglich der als Lamellen verwendeten Platten empfiehlt es sich, eine Dicke von etwa 3 mm gegenüber einer für Lamellen üblichen Dicke von etwa 1 mm vorzusehen. Dadurch wird gewährleistet, daß die Durchbrüche eine genügend ausgeprägte Aufteilung des Luftstromes in einzelne Teilströme bewirken.

Eine divergierende Diffusausströmung wird dann erreicht, wenn die Achsen der kanalartigen Durchbrüche unterschiedliche Richtungen haben. Eine gewisse Divergenz der Diffusausströmung erhält man bereits dann, wenn jede Platte nur mit solchen Durchbrüchen versehen ist, deren Achsen die gleichen Richtungen aufweisen, und wenn die Achsrichtungen der Durchbrüche von wenigstens zwei Platten verschieden sind. Beispielsweise können Platten mit nach oben und mit nach unten geneigten Durchbrüchen einander abwechseln.

Um eine verfeinerte Diffusausströmung aus dem Luftauslaß in geschlossenem Zustand der Platten zu gewährleisten, empfiehlt es sich, daß die Achsen der kanalartigen Durchbrüche einer Platte unterschiedliche Richtungen haben. Je nachdem, wie die kanalartigen Durchbrüche in den Platten angeordnet sind, können unterschiedliche Konturen der divergierenden Diffusausströmung in der geschlossenen Stellung der Platten erzeugt werden. Ein Luftauslaß mit Drallcharakteristik der Luftausströmung ergibt sich beispielsweise dann, wenn die kanalartigen Durchbrüche in den Platten derart angeordnet sind, daß die Durchbrüche in der Schließstellung der Platten einen inneren und einen den inneren umfassenden äußeren ringartigen Auslaßbereich bilden, wenn die Durchbrüche weiterhin in Umfangsrichtung des jeweiligen ringartigen Auslaßbereiches geneigt sind und die Neigung der Durchbrüche des inneren Auslaßbereiches der Neigung der Durchbrüche des äußeren Auslaßbereiches entgegengesetzt ist. Bei einer derartigen Ausgestaltung der Platten wird eine über den gesamten Ausströmradius homogene Luftverteilung und ein stabiles Ausströmverhalten erreicht. Ein solcher Luftauslaß kann beispielsweise mit vier oder fünf Platten realisiert werden, wobei jeweils zwei Platten bezüglich der kanalartigen Durchbrüche gleichartig ausgebildet sein können.

Eine Auffächerung der Luftströmung in eine Vielzahl von Luftstrahlen mit oder ohne Verdrallung kann beispielsweise auch dadurch erreicht werden, daß jede Platte des Luftauslasses Durchbrüche mit zwei unterschiedlichen Richtungen aufweist und diese Platten einander in bestimmter Weise zugeordnet sind. Eine mögliche Variante besteht darin, daß die kanalartigen Durchbrüche vier verschiedene Richtungen haben und in den Platten derart angeordnet sind, daß die Durchbrüche in der Schließstellung der Lamellen ein regelmäßiges Muster bilden. Hierbei kann man die kanalartigen Durchbrüche so aufteilen, daß die kanalartigen Durchbrüche gleicher Richtung auf jeweils einem Viertel der Ausströmfläche des Luftauslasses angeordnet sind. Hierbei empfiehlt es sich, vier oder sechs Platten in dem Luftauslaß anzuordnen. Man kann die kanalartigen Durchbrüche mit vier unterschiedlichen Richtungen aber auch so verteilen, daß jeweils auf der halben Fläche von zwei benachbarten Platten Durchbrüche mit vier unterschiedlichen Richtungen verteilt sind. Auch hierbei empfiehlt sich die Verwendung von vier oder sechs Platten für den Luftauslaß. – Diese beiden Varianten bieten die Möglichkeit, alle Platten bezüglich der Durchbrüche gleichartig zu gestalten.

Man kann die kanalartigen Durchbrüche in den Platten aber auch so ausgestalten, daß die Durchbrüche sechs verschiedene Richtungen haben und daß kanalartige Durchbrüche aller sechs Richtungen jeweils auf die halbe Fläche von drei benachbarten Platten verteilt sind. Durch eine solche Maßnahme wird die homogene Verteilung der einzelnen Luftstrahlen und die Verdrallung des ausströmenden Luftstromes weiter verfeinert.

Die für den Luftauslaß verwendeten Platten dienen in geöffneter bzw. leicht geschwenkter Stellung zugleich als Richtlamellen für einen ausströmenden Kompakt-Strahl. Die Platten können hierzu mit mittig oder seitlich angeordneten Schwenkachsen versehen sein. – Zur vertikalen Ausrichtung des aus dem Luftauslaß austretenden Luftstromes kann das Gehäuse im übrigen mit zwei Lagerzapfen zur schwenkbaren Anordnung des Luftauslasses in einem Rahmen versehen sein.

Mehrere Ausführungsbeispiele des neuen Luftauslasses sind in den Figuren 1 bis 23 dargestellt. Dabei zeigen

die Figuren 1 bis 3 in Ansicht, Draufsicht und Querschnitt den prinzipiellen Aufbau eines Luftauslasses,

die Figuren 4 bis 8 drei Ausführungsbeispiele für in dem Luftauslaß schwenkbar angeordnete Platten,

die Figuren 9 bis 16 einen Luftauslaß mit einer weiteren Ausführungsform für die Gestaltung der schwenkbaren Platten,

die Figuren 17 bis 19 ein weiteres Ausführungsbeispiel für die Ausgestaltung einer schwenkbaren Platte,

die Figuren 20 und 21 zwei Ausführungsbeispiele für die Ausgestaltung eines Luftauslasses mit schwenkbaren Platten gemäß dem Ausführungsbeispiel nach den Figuren 17 bis 19,

Figur 22 ein weiteres Ausführungsbeispiel für die Gestaltung der schwenkbaren Platten und

Figur 23 ein weiteres Ausführungsbeispiel für die Gestaltung und Anordnung der schwenkbaren Platten.

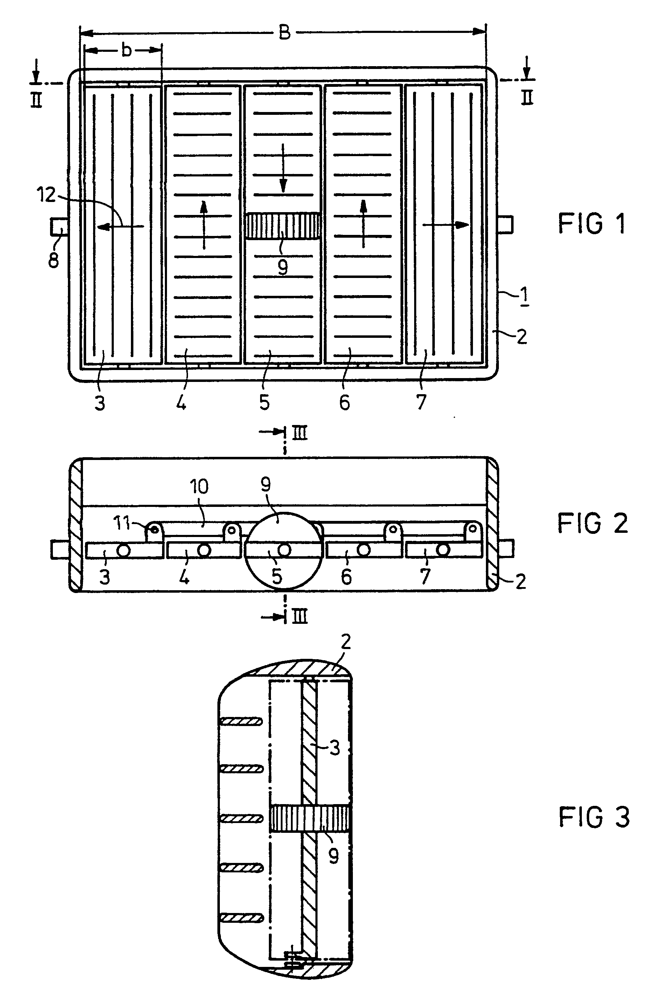

Gemäß den Figuren 1 bis 3 besteht der Luftauslaß 1 aus einem Gehäuse 2 mit fünf jeweils um eine vertikale Achse schwenkbar angeordneten Platten 3 bis 7. Die mittlere Platte 5 ist mit einem Bedienungselement 9 versehen. Die Platten 3 bis 7 sind untereinander mittels einer Koppelstange 10 gekoppelt, die in Achsstummel 11 auf der Rückseite der Platten 3 bis 7 eingeklippst ist.

Die Platten 3 bis 7 sind im wesentlichen rechteckförmig gestaltet und weisen eine Breite b auf, die nur unwesentlich kleiner als ein Fünftel der lichten Weite B des Luftauslasses ist. Jede Platte ist mit nicht näher bezeichneten und in Figur 1 lediglich angedeuteten kanalartigen bzw. schlitzartigen Durchbrüchen versehen, deren Achsen mit der jeweiligen Plattenfläche und damit – im geschlossenen Zustand der Platten 3 bis 7 – mit der Auslaßfläche des Luftauslasses einen Winkel von etwa 30 bis 60° einschließen. Diese Durchbrüche sind beispielsweise derart angeordnet, daß die Luft aus der Platte 3 nach links ausströmt, aus der Platte 4 nach oben, aus der Platte 5 nach unten, aus der Platte 6 nach oben und aus der Platte 7 nach rechts.

Im einfachsten Falle können die Platten 3 bis 7 gleichartig ausgebildet sein, so daß die Luft im geschlossenen Zustand der Platten aus dem Auslaß beispielsweise nach oben oder nach unten ausströmt. In jedem Fall weist der Luftauslaß in der geschlossenen Stellung der Klappen eine zusätzliche Ausströmcharakteristik auf. – Das Gehäuse 2 kann seitlich mit zwei Achsstummeln 8 versehen sein, um den Luftauslaß als Ganzes schwenkbar in einem Rahmen anzuordnen. Weiterhin besteht die Möglichkeit, mehrere Luftauslässe gemäß Figur 1 nebeneinander anzuordnen und gegebenenfalls unterschiedlich mit schwenkbaren Platten zu bestücken.

Die Ausströmungsrichtungen der Luft aus den Platten 3 bis 7 in Figur 1 sind mittels der Pfeile 12 angedeutet.

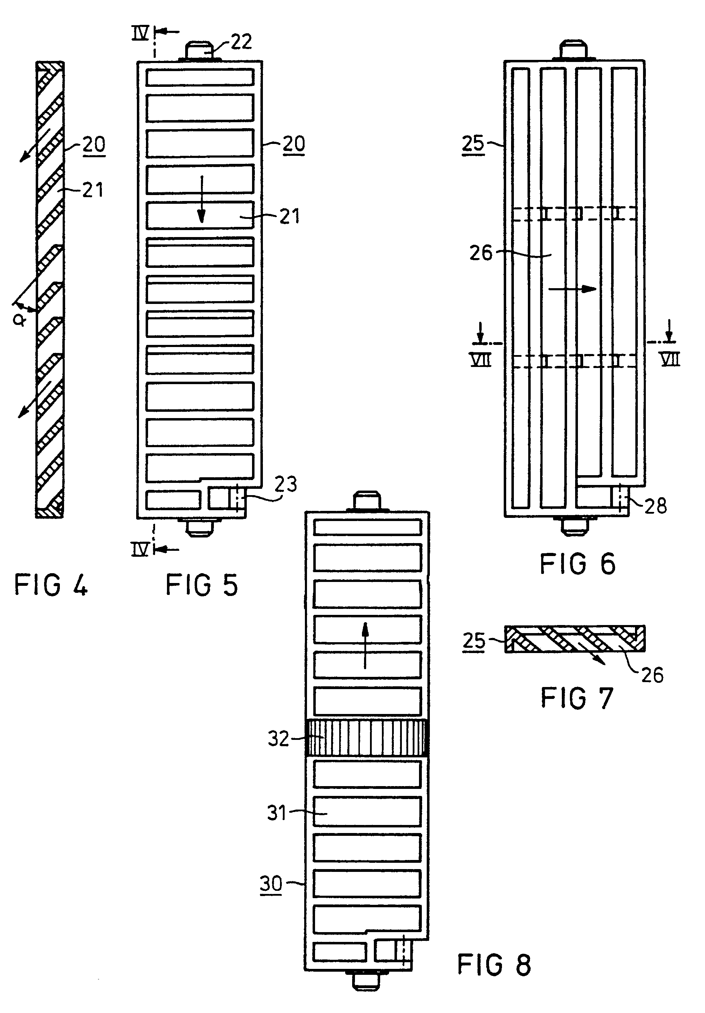

Figur 5 zeigt in Ansicht und Figur 4 im Längsschnitt eine Platte 20, aus der die Luft schräg nach unten ausströmen kann. Die Platte ist hierzu mit mehreren, in Längsrichtung der Platte aufeinanderfolgend angeordneten kanalartigen bzw. schlitzartigen Durchbrüchen 21 versehen. Die Achsrichtung dieser Durchbrüche schließt mit der Plattenebene einen Winkel α von etwa 50° ein. – Die zwischen den Durchbrüchen verbleibenden Stege sind im mittleren Bereich der Platte an den inneren Enden etwas abgekantet, um Strömungsanteile zu erhalten, die in Achsrichtung des Luftauslasses aus der Platte 20 austreten.

Zur schwenkbaren Anordnung der Platte 20 ist diese oben und unten mit jeweils einem mittig angeordneten Achsstummel 22 versehen. Zur Kopplung mehrerer Platten untereinander mittels einer einklippsbaren Koppelstange ist unten rechts die Achse 23 vorgesehen.

Figur 6 zeigt in Ansicht und Figur 7 im Querschnitt eine schwenkbare Platte 25, deren kanal – bzw. schlitzartige Durchbrüche 26 quer zur Längsrichtung der Platte aufeinanderfolgend angeordnet und derart gegen die Plattenebene geneigt sind, daß die Luft nach rechts aus der Platte ausströmt. Zum Eingriff einer Koppelstange ist die Achse 28 vorgesehen.

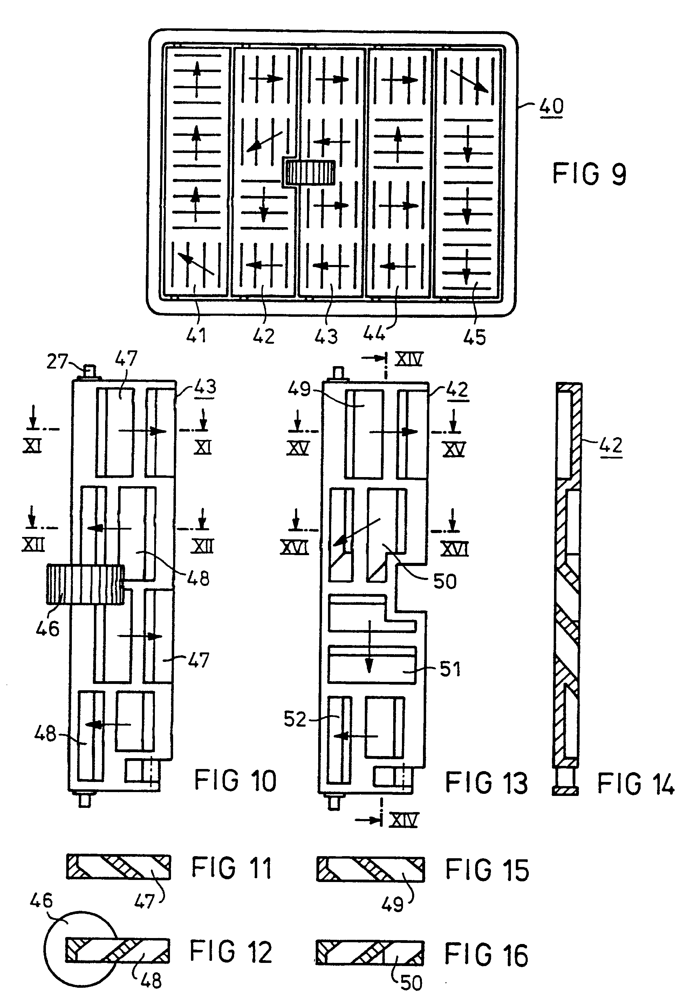

Figur 8 zeigt eine Platte 30, die bei einem Luftauslaß mit fünf Platten in mittlerer Position angeordnet werden kann und mit einem Bedienungselement 32 in Form einer Rändelscheibe versehen ist. Die Durchbrüche 31 sind wie bei der Platte gemäß Fig. 5 in Längsrichtung der Platte aufeinanderfolgend angeordnet, ihre Neigung ist aber der Neigung der Durchbrüche in der Platte 20 gemäß Figur 5 entgegengesetzt, so daß die Luft nach oben aus den Durchbrüchen ausströmen kann.

Figur 9 zeigt einen Luftauslaß 40 mit fünf Platten 41 bis 45, von denen jede mit Durchbrüchen unterschiedlicher Achsrichtungen versehen ist. Dadurch wird insgesamt ein Luftauslaß gebildet, der einen inneren, ringartigen Auslaßbereich und einen äußeren, ebenfalls ringartigen Auslaßbereich aufweist. Die Durchbrüche sind derart angeordnet, daß sie in Umfangsrichtung des jeweiligen ringartigen Auslaßbereiches geneigt sind ; dabei ist die Neigung der Durchbrüche des inneren Auslaßbereiches der Neigung der Durchbrüche des äußeren Auslaßbereiches entgegengesetzt.

Die Figuren 10 bis 12 zeigen in Ansicht und in zwei Querschnitten die Gestaltung der Platte 43 des Luftauslasses 40 gemäß Figur 9. Diese Platte 43 ist mit einem Bedienelement 46 in Form einer Rändelscheibe versehen, die Schwenkachse 27 ist seitlich angeordnet. Die Platte weist weiterhin vier Ausströmbereiche auf. Im oberen Bereich strömt die Luft nach rechts, im darunterliegenden Ausströmbereich nach links, im untersten Ausströmbereich ebenfalls nach links und im darüberliegenden Ausströmbereich nach rechts. Jeder Ausströmbereich besteht aus zwei kanalartigen Durchbrüchen 47 bzw. 48. Unten rechts ist eine nicht näher bezeichnete Achse zum Einklippsen einer Koppelstange vorgesehen.

Figur 13 zeigt in Ansicht, Figur 14 im Längsschnitt und die Figuren 15 und 16 in zwei Querschnitten die Platte 42 des Luftauslasses 40 gemäß Figur 9. Danach strömt durch den oberen Auslaßbereich mit den Durchbrüchen 49 die Luft nach rechts, in dem darunterliegenden Auslaßbereich mit den Durchbrüchen 50 nach links und zum Teil schräg links nach unten, im untersten Auslaßbereich mit den Durchbrüchen 52 ebenfalls nach links und im darüberliegenden Auslaßbereich mit den Durchbrüchen 51 nach unten.

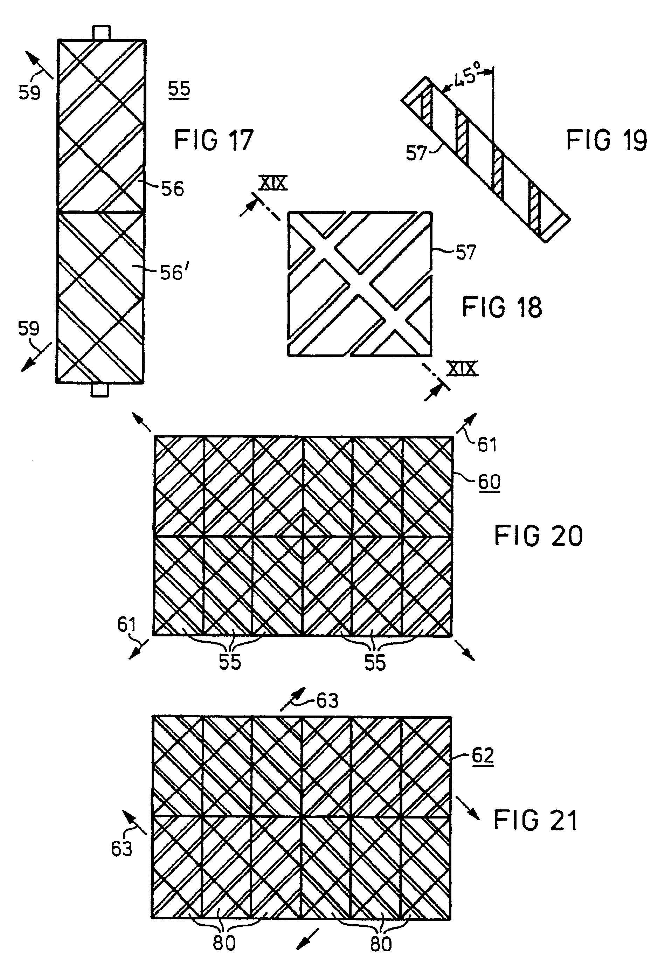

Figur 17 zeigt eine Platte 55, die um ihre Mittelachse schwenkbar ist und bei der die Durchbrüche 56 und 56' unter einem Winkel von 45° zur Schwenkachse verlaufend angeordnet sind. Dabei verlaufen die Durchbrüche in der oberen Hälfte von links unten nach rechts oben und die Durchbrüche in der unteren Hälfte von links oben nach rechts unten, so daß die Luft in Richtung der Pfeile 59 austritt. Einen Ausschnitt aus einer solchen Platte zeigt Figur 18 in Ansicht und Figur 19 im Schnitt. Zwischen den Durchbrüchen verbleiben die Wände 57. Aus Figur 19 ist ersichtlich, daß die Achsen der Durchbrüche mit der jeweiligen Plattenebene einen Winkel von 45° einschließen.

Figur 20 zeigt in schematischer Darstellung einen Luftauslaß 60, der mit sechs gemäß Figur 17 ausgestalteten Platten 55 bestückt ist. Dabei sind die drei linken Platten um 180° verdreht zu den drei rechten Platten angeordnet. Die Durchbrüche der sechs Platten bilden ein regelmäßiges Muster. Durch die spezielle Zuordnung der rechten drei Platten zu den linken drei Platten weist der Luftauslaß kanalartige Durchbrüche mit insgesamt vier unterschiedlichen Richtungen auf. Dabei sind die kanalartigen Durchbrüche gleicher Richtung jeweils auf einem Viertel der Ausströmfläche des Luftauslasses angeordnet. Es ergeben sich insgesamt vier Haupt-Ausströmungsrichtungen, die über die Ecken des Luftauslasses verlaufen und mit dem Pfeilen 61 bezeichnet sind.

Der Luftauslaß 62 gemäß Figur 21 ist ebenfalls mit sechs Platten bestückt. Diese sind ähnlich wie die Platten 55 des Luftauslasses gemäß Fig. 20 ausgebildet, jedoch sind die Achsrichtungen der Durchbrüche anders gewählt. Dadurch ergibt sich eine Ausströmcharakteristik, bei der die Luft in vier verschiedenen Hauptrichtungen im wesentlichen über die Seitenkanten des Luftauslasses ausströmt, wie die Pfeile 63 verdeutlichen.

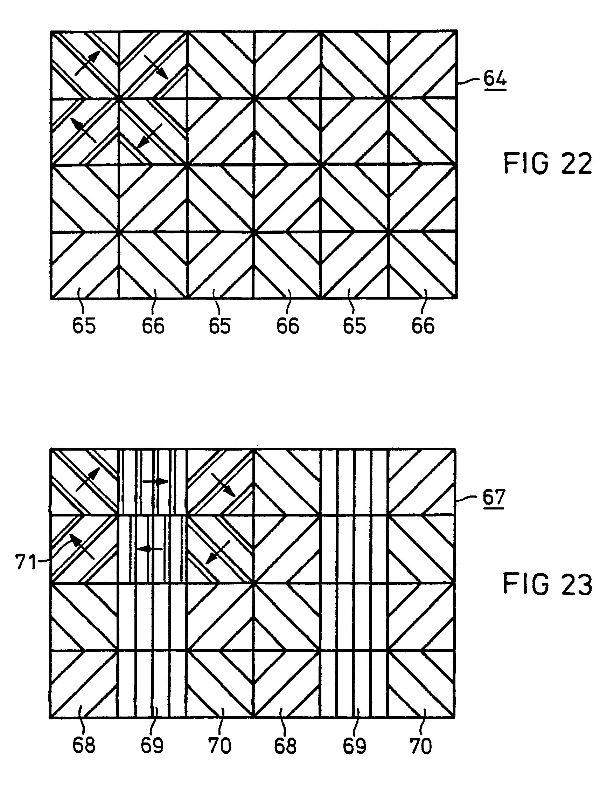

Der Luftauslaß 64 gemäß Figur 22 besteht aus zwei Platten 65 und 66, die mehrfach abwechselnd zueinander angeordnet sind. Die Platten 65 und 66 sind spiegelbildlich ausgebildet bzw. um 180° verdreht zueinander angeordnet. Hierbei sind jeweils sowohl auf der oberen Hälfte einer Platte als auch auf der unteren Hälfte Durchbrüche vorgesehen, die einerseits von links oben nach rechts unten als auch von links unten nach rechts oben verlaufen. Dadurch sind auf jeweils der halben Fläche von zwei benachbarten Platten kanalartige Durchbrüche mit vier unterschiedlichen Richtungen angeordnet.

Figur 23 zeigt einen Luftauslaß 67, der aus drei verschiedenen schwenkbaren Platten 68, 69 und 70 besteht, wobei jede Platte zweifach vorhanden ist. Jede Platte weist sowohl in der oberen Hälfte als auch in der unteren Hälfte kanalartige Durchbrüche mit zwei unterschiedlichen Achsrichtungen auf. Die Ausströmrichtungen für diese Durchbrüche sind mit den Pfeilen 71 gekennzeichnet. Dadurch, daß die Durchbrüche der Platten 68 und 70 schräg zur Schwenkachse der Platte und die Durchbrüche 69 parallel zur Schwenkachse der Platte 69 verlaufen, ergeben sich insgesamt 6 verschiedene Ausströmrichtungen, die jeweils auf die halbe Fläche von 3 benachbarten Platten verteilt sind.

**Ansprüche**

1. Luftauslaß für Innenräume, insbesondere für den Innenraum eines Kraftfahrzeuges,
bestehend aus einem Gehäuse (2) mit mehreren miteinander gekoppelten, im Gehäuse gemeinsam schwenkbar gelagerten Lamellen mit rechteckförmiger Lamellenfläche, **dadurch gekennzeichnet,** daß die Lamellen aus Platten (3 bis 7) bestehen, deren Breite (b) höchstens gleich der lichten Breite (B) des Luftauslasses (1) dividiert durch die Anzahl der Platten ist
und daß jede Platte mit mehreren kanalartigen Durchbrüchen (21, 26, 31) versehen ist, deren Achsen mit der Plattenebene einen Winkel ($\alpha$) zwischen 30 und 60° einschließen.

2. Luftauslaß nach Anspruch 1, **dadurch gekennzeichnet,** daß die Achsen der kanalartigen Durchbrüche (21, 26, 31) unterschiedliche Richtungen haben.

3. Luftauslaß nach Anspruch 1, **dadurch**

**gekennzeichnet,** daß die Achsen der kanalartigen Durchbrüche (49, 50, 51, 52) einer Platte (42) unterschiedliche Richtungen haben.

4. Luftauslaß nach Anspruch 3, **dadurch gekennzeichnet,** daß die kanalartigen Durchbrüche in den Platten derart angeordnet sind, daß die Durchbrüche in der Schließstellung der Platten einen inneren und einen den inneren umfassenden äußeren ringartigen Auslaßbereich bilden, daß die Durchbrüche in Umfangsrichtung des jeweiligen ringartigen Auslaßbereiches geneigt sind und daß die Neigung der Durchbrüche des inneren Auslaßbereiches der Neigung der Durchbrüche des äußeren Auslaßbereiches entgegengesetzt ist (Fig.9).

5. Luftauslaß nach Anspruch 3, **dadurch gekennzeichnet,** daß jede Platte (41 bis 45) Durchbrüche mit zwei unterschiedlichen Richtungen aufweist.

6. Luftauslaß nach Anspruch 5, **dadurch gekennzeichnet,** daß die kanalartigen Durchbrüche vier verschiedene Richtungen haben und in den Platten derart angeordnet sind, daß die Durchbrüche in der Schließstellung der Lamellen ein regelmäßiges Muster bilden (Fig. 20).

7. Luftauslaß nach Anspruch 6, **dadurch gekennzeichnet,** daß die kanalartigen Durchbrüche gleicher Richtung auf jeweils 1/4 der Ausströmfläche des Luftauslasses angeordnet sind (Fig. 20, Fig. 21).

8. Luftauslaß nach Anspruch 6, **dadurch gekennzeichnet,** daß kanalartige Durchbrüche mit vier unterschiedlichen Richtungen jeweils auf die halbe Fläche von zwei benachbarten Platten verteilt sind (Fig. 22).

9. Luftauslaß nach Anspruch 5, **dadurch gekennzeichnet,** daß die kanalartigen Durchbrüche sechs verschiedene Richtungen haben und daß kanalartige Durchbrüche aller sechs Richtungen jeweils auf die halbe Fläche von drei benachbarten Platten verteilt sind (Fig. 23).

10. Luftauslaß nach einem der Ansprüche 1 bis 9, **dadurch gekennzeichnet,** daß die Schwenkachsen der Platten (43) seitlich angeordnet sind (Fig. 10).

11. Luftauslaß nach einem der Ansprüche 1 bis 10, **dadurch gekennzeichnet,** daß das Gehäuse (2) mit zwei Lagerzapfen (8) zur schwenkbaren Anordnung des Luftauslasses (1) in einem Rahmen versehen ist.

**Claims**

1. Air outlet for interior spaces, in particular for the interior space of a motor vehicle,
comprising a housing (2) having several vanes with a rectangular vane surface, coupled to each other and mounted together pivotably in the housing,
characterised in that the vanes comprise plates (3 to 7) whose width (b) is at the most equal to the inside width (B) of the air outlet (1) divided by the number of plates
and that each plate is provided with several duct-type openings (21, 26, 31) whose axes form an angle (α) between 30 and 60° with the plate plane.

2. Air outlet according to claim 1, characterised in that the axes of the duct-type openings (21, 26, 31) have different directions.

3. Air outlet according to claim 1, characterised in that the axes of the duct-type openings (49, 50, 51, 52) of one plate (42) have different directions.

4. Air outlet according to claim 3, characterised in that the duct-type openings are arranged in the plates in such a way that in the closed position of the plates the openings form an inner ring-type outlet zone and an outer ring-type outlet zone surrounding the inner outlet zone, in that the openings are inclined in the circumferential direction of the respective ring-type outlet zones and in that the inclination of the openings of the inner outlet zone is opposite to the inclination of the openings of the outer outlet zone (Fig. 9).

5. Air outlet according to claim 3, characterised in that each plate (41 to 45) has openings with two different directions.

6. Air outlet according to claim 5, characterised in that the duct-like openings have four different directions and are arranged in the plates in such a way that in the closed position the openings of the vanes form a regular pattern.

7. Air outlet according to claim 6, characterised in that duct-like openings of the same direction are arranged respectively on 1/4 of the discharge surface of the air outlet (Fig. 20, Fig. 21).

8. Air outlet according to claim 6, characterised in that duct-like openings with four different directions are distributed respectively on surface halves of two adjacent plates (Fig. 22).

9. Air outlet according to claim 5, characterised in that the duct-like openings have six different directions and in that duct-like openings of all six directions are distributed respectively on surface halves of three adjacent plates (Fig. 23).

10. Air outlet according to one of claims 1 to 9, characterised in that the pivot axes of the plates (43) are arranged laterally (Fig. 10).

11. Air outlet according to one of claims 1 to 10, characterised in that the housing (2) is provided with two pivot pins (8) so that the air outlet (1) can be swivellably arranged in a frame.

## Revendications

1. Buse ou bouche d'aération pour des habitacles, notamment pour l'habitacle d'un véhicule automobile,
constituée d'un corps (2) ayant plusieurs lamelles qui sont couplées les unes aux autres, qui sont montées basculantes en commun dans le corps et qui ont une surface rectangulaire, caractérisée, en ce que les lamelles sont constituées de plaquettes (3 à 7) dont la largeur (b) est au plus égale à la largeur intérieure (B) de la buse d'aération (1), divisée par le nombre des plaquettes,
et en ce que chaque plaquette est munie de plusieurs passages (21, 26, 31) en forme de canaux dont les axes font, avec le plan des plaquettes, un angle (α) compris entre 30 et 60°.

2. Buse d'aération suivant la revendication 1, caractérisée en ce que les axes des passages (21, 26, 31) en forme de canaux ont des directions différentes.

3. Buse d'aération suivant la revendication 1, caractérisée en ce que les axes des passages (49, 50, 51, 52) en forme de canaux d'une plaquette (42) ont des directions différentes.

4. Buse d'aération suivant la revendication 3, caractérisée en ce que les passages en forme de canaux sont disposés dans les plaquettes, de façon que les passages forment, en la position de fermeture des plaquettes, une zone de sortie annulaire intérieure et une zone de sortie annulaire extérieure entourant la zone intérieure, en ce que les passages sont inclinés dans la direction du pourtour de la zone de sortie annulaire, et en ce que l'inclinaison des passages de la zone intérieure de sortie est opposée à l'inclinaison des passages de la zone extérieure de sortie (figure 9).

5. Buse d'aération suivant la revendication 3, caractérisée en ce que chaque plaquette (41 à 45) comporte des passages ayant deux directions différentes.

6. Buse d'aération suivant la revendication 5, caractérisée en ce que les passages en forme de canaux ont quatre directions différentes et sont disposés dans les plaquettes de façon que les passages forment, en la position de fermeture des lamelles, un dessin régulier (figure 20).

7. Buse d'aération suivant la revendication 6, caractérisée en ce que les passages en forme de canaux de même direction sont disposés chacun sur un quart de la surface de sortie de la buse d'aération (figure 20, figure 21).

8. Buse d'aération suivant la revendication 6, caractérisée en ce que les passages en forme de canaux, ayant quatre directions différentes, sont répartis sur la moitié de la surface de deux plaquettes voisines (figure 22).

9. Buse d'aération suivant la revendication 5, caractérisée en ce que les passages en forme de canaux ont six directions différentes, et en ce que des passages en forme de canaux ayant toutes les six directions sont répartis sur la moitié de la surface de trois plaquettes voisines (figure 23).

10. Buse d'aération suivant l'une des revendications 1 à 9, caractérisée en ce que les axes de basculement des plaquettes (43) sont disposés latéralement (figure 10).

11. Buse d'aération suivant l'une des revendications 1 à 10, caractérisée en ce que le corps (2) est muni de deux tourillons de palier (8) pour le montage à basculement de la buse d'aération (1) dans un cadre.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

FIG 17

55

59

56

56'

59

FIG 18

57

XIX

XIX

FIG 19

45°

57

57

FIG 20

61

60

61

55

55

FIG 21

63

62

63

80

80

FIG 22

65  66  65  66  65  66

FIG 23

71

67

68  69  70  68  69  70